Europäisches Patentamt

European Patent Office

Office européen des brevets

(19)

(11) Numéro de publication: **0 258 135 B1**

# FASCICULE DE BREVET EUROPEEN

(45) Date de publication de fascicule du brevet:
24.07.91

(51) Int. Cl.5: **G01W 1/14**, G01B 7/06,
G01B 21/08

(21) Numéro de dépôt: 87401879.9

(22) Date de dépôt: 13.08.87

(54) **Procédé et dispositif de mesure de hauteur d'un produit dans un milieu environnant ayant un comportement thermique différent de celui du produit à mesurer, notamment pour mesurer la hauteur de neige.**

(30) Priorité: **19.08.86 FR 8611856**

(43) Date de publication de la demande:
**02.03.88 Bulletin 88/09**

(45) Mention de la délivrance du brevet:
**24.07.91 Bulletin 91/30**

(84) Etats contractants désignés:
**AT CH DE ES GB IT LI SE**

(56) Documents cités:
**CH-A- 574 105**

**PATENT ABSTRACTS OF JAPAN, vol. 5, no. 202 (P-95)[874], 22 décembre 1981; & JP-A-56 124 076 (KENSETSUSHIYOU DOBOKU KEN- KYUSHO) 20-09-1981**

(73) Titulaire: **SIMECSOL**
**115 rue Saint-Dominique**
**F-75007 Paris(FR)**

(72) Inventeur: **Pincent, Bernard**
**24 allée Blaise Pascal**
**F-78460 Chevreuse(FR)**

(74) Mandataire: **Joly, Jean-Jacques et al**
**CABINET BEAU DE LOMENIE 55, rue d'Ams- terdam**
**F-75008 Paris(FR)**

## Description

La présente invention concerne la mesure de la hauteur d'un produit dans un milieu environnant ayant un comportement thermique différent de celui du produit.

Un domaine particulier d'application de l'invention est la mesure de la hauteur de neige. L'invention est toutefois également utilisable pour mesurer la hauteur d'autres produits, en particulier le sable ou d'autres matériaux pulvérulents ou liquides dont le comportement thermique (conductibilité, capacité calorifique, résistance thermique, ...) présente un contraste par rapport à celui du milieu environnant, c'est-à-dire, par exemple, des produits qui, en masse, constituent des "amortisseurs thermiques" par opposition à un milieu gazeux environnant (l'atmosphère) qui présente des variations rapides de température dans le temps et l'espace.

La connaissance de la hauteur de neige en différents endroits d'une zone géographique est une information indispensable pour la gestion des routes ou des stations de sports d'hiver. Il est souhaitable de disposer de cette information sans nécessiter le déplacement de personnel aux différents endroits où la mesure est à effectuer.

Il a été proposé dans le document JP-A-56-124076 d'effectuer une mesure de couverture neigeuse au moyen d'un tube transparent dans lequel sont logés plusieurs dispositifs photoélectriques à des niveaux différents. Le fonctionnement est basé sur la mesure de l'écart entre les signaux fournis par l'élément photoélectrique supérieur et les autres. A l'évidence, le bon fonctionnement du système demande un éclairement suffisant et uniforme des éléments photoélectriques situés dans l'air. Y compris dans la journée, des mesures erronées peuvent être produites, par exemple en raison d'un éclairage partiel par le soleil ou de l'occultation de parties du tube par du givre ou des saletés.

Le document CH-A-574 105 décrit un procédé et un dispositif de détection de paramètres d'un milieu, notamment d'une couche de neige afin d'évaluer des risques d'avalanche. Les paramètres mesurés au moyen d'une sonde sont la température, la densité et la teneur en eau. Le but n'est pas de mesurer la hauteur de la couche de neige et le dispositif décrit ne le permet pas, même dans le cas où plusieurs sondes sont réparties le long d'un mât.

Ainsi, l'invention a-t-elle pour objet de fournir des moyens de mesure de hauteur automatiques, rapides et fiables, pouvant fonctionner en permanence, cela sans demander d'investissements élevés pour leur installation ou leur entretien.

Conformément à l'invention, il est proposé un procédé de mesure de hauteur d'un produit dans un milieu environnant ayant un comportement thermique différent de celui du produit, notamment pour mesurer la hauteur de neige sur le sol, procédé comprenant:

- la mise en place d'une canne de mesure dont au moins la partie inférieure est destinée à être noyée dans le produit, avec une pluralité de capteurs répartis sur la hauteur de la canne, et
- l'acquisition au cours du temps de signaux délivrés par les différents capteurs sur la canne, procédé caracterisé en ce que:
- les capteurs utilisés sont des capteurs de température de sorte que les signaux recueillis représentent les températures aux emplacements des capteurs sur la canne,
- la variation dans le temps des signaux recueillis est examinée, et
- le capteur le moins élevé qui délivre un signal dont la variation est supérieure à un seuil est identifié.

L'expérience montre que la neige constitue un "amortisseur thermique" très efficace et qu'un signal délivré par un capteur de température placé dans la neige ne montre que des variations faibles et très lentes. Au contraire, le signal délivré par un capteur placé dans l'air au-dessus de la neige montre des variations rapides (apparition et disparition du soleil, vent) dont l'amplitude peut être importante (écart de température entre nuit et jour ensoleillé en hiver).

Le procédé proposé n'est pas basé sur l'évaluation des écarts entre des mesures absolues effectuées à différentes hauteurs, mais, de façon plus fiable, sur la surveillance de la variation dans le temps des températures mesurées à différentes hauteurs. Cette surveillance peut être réalisée en examinant la vitesse instantanée de variation de température ou l'amplitude de variation de température sur une période de temps donnée. De préférence, on effectue un traitement statistique des valeurs de température mesurées périodiquement sur une durée prédéterminée, en examinant la dispersion des valeurs mesurées.

Le procédé selon l'invention permet ainsi de connaître la hauteur de neige (ou d'autre produit à faible conductibilité thermique) par des moyens simples et peu coûteux et avec une précision tout à fait suffisante pour l'utilisation qui est généralement faite de l'information obtenue (ouverture ou fermeture de routes ou de pistes de ski, déclenchement d'opération de déneigement, ...). Cette précision est en particulier déterminée par le pas avec lequel les capteurs de température sont disposés le long de la canne de mesure.

L'invention a aussi pour but de fournir un dispositif permettant la mise en oeuvre du procédé.

Ce but est atteint grâce à un dispositif comportant :

- une canne de mesure dont au moins la partie inférieure est destinée à être noyée dans le produit dont la hauteur est à mesurer, et qui est munie de capteurs répartis sur sa hauteur, et
- des circuits de détection et de traitement qui sont reliés aux différents capteurs et qui recueillent des signaux délivrés par les capteurs,
    dispositif caractérisé en ce que :
- les capteurs sont des capteurs de température, et
- les circuits de détection et de traitement recueillent lesdits signaux représentatifs de la température existant aux emplacements des capteurs sur la canne, et comparent la variation dans le temps des signaux recueillis à une valeur de seuil prédéterminée afin de fournir une information représentant la hauteur du produit en fonction des résultats des comparaisons.

L'invention sera mieux comprise à la lecture de la description faite ci-après, à titre indicatif mais non limitatif, en référence aux dessins annexés sur lesquels :

- la figure 1 est une vue schématique d'un mode de réalisation d'un dispositif conforme à l'invention;
- la figure 2 est une vue de détail en coupe de la canne de mesure faisant partie du dispositif de la figure 1;
- la figure 3 illustre l'allure des signaux fournis par les capteurs de température répartis sur la canne de mesure;
- la figure 4 est un schéma d'un mode de réalisation de circuits d'acquisition et de traitement des signaux fcurnis par les capteurs de température ; et
- la figure 5 est un organigramme montrant les opérations réalisées au cours du processus de traitement des signaux fournis par les capteurs de température.

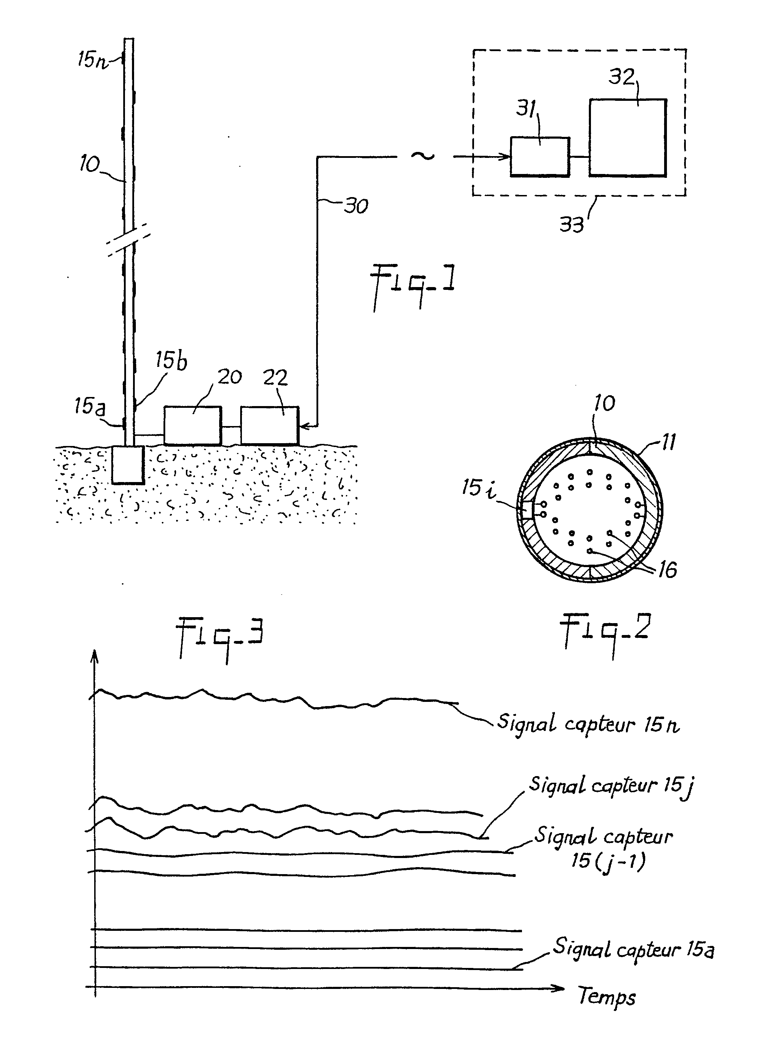

La figure 1 montre un dispositif destiné à mesurer la hauteur de neige sur le sol. Une canne 10 est fixée sur le sol et s'élève verticalement au-dessus de celui-ci. Des capteurs de température 15a, 15b, ... 15n sont répartis sur la hauteur de la canne 10 et sont reliés par des conducteurs respectifs à une unité d'acquisition logée dans un boîtier 20 au pied de la canne 10. Les signaux disponibles en sortie de l'unité d'acquisition sont appliqués à une unité de transmission 22 pour être transmis par une liaison 30 jusqu'à une unité de réception 31 reliée à un micro-ordinateur 32 d'un poste central 33. L'alimentation électrique des capteurs et des unités d'acquisition et de transmission est assurée au moyen d'une batterie et/ou d'un panneau solaire (non représentés).

Comme cela est visible sur la figure 2, la canne de mesure 10 est un tube sur la paroi duquel sont fixés les capteurs de température (tel que 15i) de sorte que les capteurs affleurent par leur partie sensible à la surface extérieure de la canne. La canne 10 est réalisée par exemple en matière plastique et les capteurs sont éventuellement protégés par un revêtement superficiel formé par une gaine ou une couche mince de résine 11 de conductibilité thermique élevée. La hauteur totale de la canne 10 et le nombre et la répartition des capteurs de température le long de la canne sont choisis en fonction des hauteurs probables de neige à mesurer et de la précision souhaitée. A titre indicatif, la hauteur de la canne est d'environ 3 à 4 m. Les capteurs sont au nombre de plusieurs dizaines. Sur la moitié inférieure de la canne les capteurs peuvent être disposés avec un pas régulier (par exemple entre 5 et 15 cm) plus petit que le pas (par exemple entre 10 et 30 cm), avec lequel les capteurs restants sont disposés sur la moitié supérieure de la canne. On obtient de la sorte une meilleure précision absolue pour les hauteurs de neige les plus faibles. Ce même résultat peut être atteint avec un pas de positionnement des capteurs qui croît régulièrement depuis le bas de la canne jusqu'en haut de celle-ci. L'alimentation des capteurs, et/ou leur liaison avec l'unité d'acquisition 21 est réalisée au moyen de conducteurs particuliers logés dans le passage central de la canne 10. Les conducteurs peuvent être sous forme de fils de connexion indépendants 16, ou encore sous forme de nappe de fils ou d'un circuit imprimé souple ou rigide. De préférence, les capteurs ne sont pas alignés sur un même côté de la canne 10 afin de limiter l'effet d'un givrage affectant essentiellement un côté particulier de la canne. On pourra adopter une disposition des capteurs alternativement sur deux côtés opposés de la canne, ou suivant une ligne décrivant une hélice à la surface de la canne.

On a envisagé ci-avant le cas d'une canne de mesure destinée à permettre la mesure de la hauteur de neige sur le sol. Bien entendu, pour d'autres applications, la hauteur de la canne ainsi que le nombre et la disposition des capteurs de température pourront être choisis différemment. En particulier, des cannes de hauteur réduite pourront être utilisées pour la mesure de hauteur de neige sur des bâtiments. Par ailleurs, la canne pourra être non pas fixée sur la surface sur laquelle le produit est accumulé, mais suspendue à une potence, par exemple pour mesurer la hauteur d'un produit pulvérulent dans un silo.

Différents types de capteurs de température peuvent être utilisés, comme par exemple des thermistances ou des thermocouples, ou encore des diodes ou des transistors ayant des caractéristiques de conduction qui varient en fonction de la température. L'utilisation de diodes ou de transistors montés en diodes permet un multiplexage facile des voies et une réduction du nombre de fils de connexion par branchement des capteurs suivant une configuration en matrice. Dans l'exemple illustré, les capteurs utilisés sont des transistors, ceux-ci ayant normalement des caractéristiques moins sujettes à variation que les diodes et étant logés dans des boîtiers qui permettent un montage mécanique facile sur la canne. En effet, comme le montre la figure 2, la canne est réalisée en deux demi-coquilles à section circulaire dans lesquelles sont formés des trous destinés à recevoir les boîtiers des transistors de manière que les faces terminales des boîtiers affleurent à la surface extérieure de la canne. Après montage et câblage des boîtiers, l'intérieur des demi-coquilles est garni d'un matériau thermiquement isolant, et les demi-coquilles sont assemblées par collage.

En variante, on pourra utiliser une canne à section carrée ou rectangulaire formée par assemblage de deux cornières à section en L.

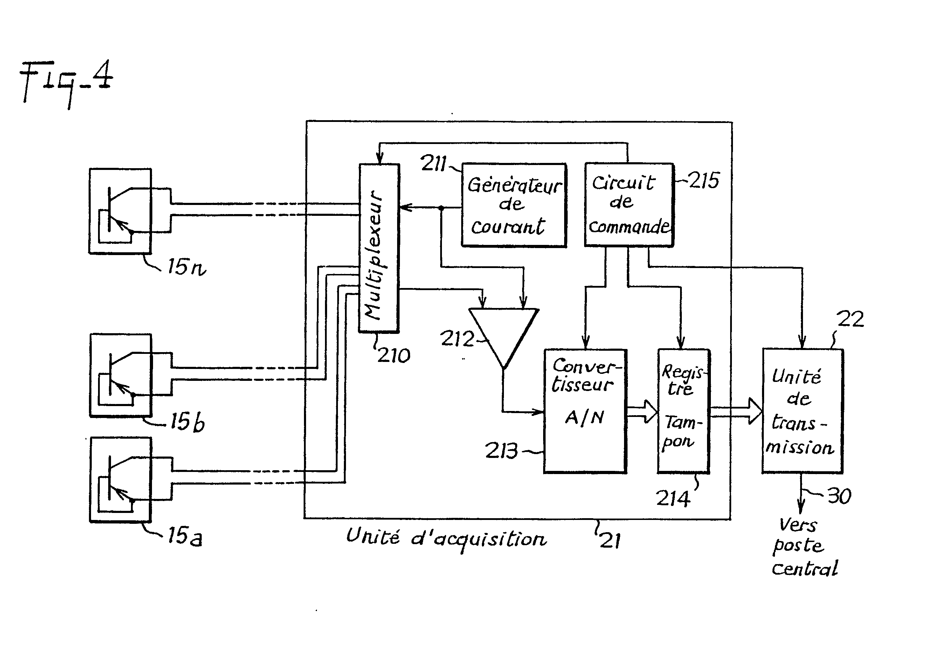

Quels que soient les capteurs de température utilisés, les signaux qu'ils délivrent sont représentatifs de la température à différents niveaux au-dessus du sol. En supposant qu'une couche de neige recouvre le sol sur une hauteur H comprise entre les niveaux où sont disposés les capteurs 15 (j-1) et 15j, les signaux délivrés par les capteurs ont une allure semblable à celle illustrée par la figure 3 (sur la figure 3, les origines en ordonnées sont décalées pour les courbes représentant les signaux délivrés par les différents capteurs). Les signaux fournis par les capteurs situés en l'air, au-dessus de la couche de neige montrent des variations de température rapides ou de forte amplitude ou les deux. Au contraire, les signaux fournis par les capteurs situés dans la couche de neige montrent des variations de température lentes et de relativement faible amplitude et ce d'autant plus que les capteurs sont enfouis plus profondément dans la couche de neige.

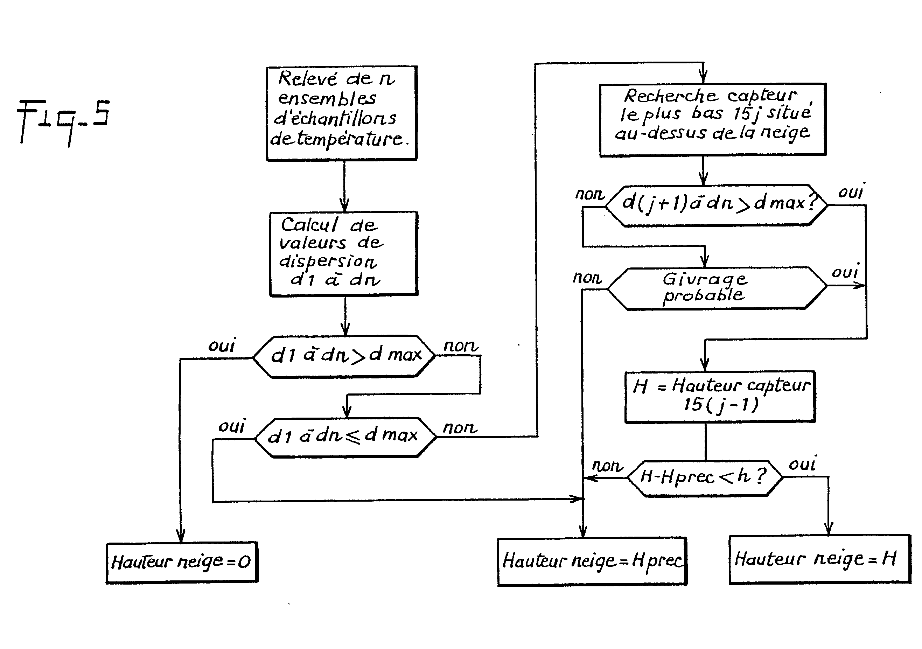

La surveillance de la variation des signaux fournis par les capteurs permet donc de déterminer la hauteur de neige. Un mode de réalisation de circuits d'acquisition et de traitement de ces signaux sera maintenant décrit en référence à la figure 4.

Dans l'exemple illustré par la figure 4, les capteurs de température sont formés par des transistors 15a, 15b , ..., 15n branchés en diodes et reliés chacun par deux conducteurs à l'unité d'acquisition 21. Un circuit de multiplexage 210 relie séquentiellement chaque capteur, d'une part, à un circuit d'alimentation 211 qui délivre un courant constant sur l'un des conducteurs reliés au capteur et, d'autre part, à un circuit amplificateur-adaptateur 212 qui reçoit la tension entre les conducteurs reliés au capteur. Une variation de température du capteur se traduit par une variation de la tension recueillie à courant constant. La sortie du circuit 212 est reliée à un convertisseur analogique-numérique 213 qui convertit la tension fournie par le capteur en un signal numérique qui est transmis à un registre-tampon 214 d'où il peut être extrait pour être transféré à l'unité de transmission 22 en vue de son émission vers le poste central 33. L'alimentation des circuits de l'unité d'acquisition et du générateur de courant 211 est assurée par une batterie (non représentée). On pourrait en variante prévoir une source d'énergie électrique utilisant des panneaux solaires. Un circuit 215 commande le fonctionnement du circuit de multiplexage 210 et du convertisseur 213, ainsi que l'écriture et la lecture dans les registres 214 et le fonctionnement de l'unité de transmission 22.

On pourra utiliser tout système connu de transmission de données numériques pour réaliser les unités de transmission 22 et de réception 31 et la liaison 30.

Les données numériques reçues sont stockées dans une mémoire vive du micro-ordinateur 32 du poste central pour être traitées. Le traitement est effectué par programme et consiste d'une façon générale à examiner la variation de la température mesurée par chaque capteur. Les étapes principales du traitement sont illustrées par l'organigramme de la figure 5.

Pour chaque signal fourni par un capteur, on examine un ensemble de valeurs d'amplitude prélevées périodiquement (par commande du circuit de multiplexage) sur une période de temps donnée. A titre indicatif, le signal de température d'un capteur donné est échantillonné toutes les 0,5 second et l'on effectue un traitement statistique sur un ensemble de 128 échantillons successifs. Le traitement statistique consiste à examiner la dispersion des valeurs formant l'ensemble examiné. On pourra par exemple caractériser la dispersion par le calcul de l'écart-type.

Lorsque les caractéristiques de dispersion d1, d2, .., dn ont été calculées pour les n capteurs sur une période donnée, elles sont successivement comparées à une valeur de seuil maximum dmax.

La valeur de seuil dmax peut être déterminée de façon expérimentale ; elle peut varier selon la durée de la période de relevé des ensembles d'échantillons.

Si toutes les valeurs de dispersion d1, d2, .., dn sont supérieures à dmax, la hauteur de neige est nulle (H = 0) et le processus est réitéré pour le traitement des ensembles de valeurs d'amplitude obtenues sur la période de temps suivante.

Si toutes les valeurs de dispersion d1, d2, .., dn sont inférieures ou égales à dmax, on conserve la hauteur de neige précédemment mesurée (Hpréc.)

Si certaines des valeurs de dispersion sont supérieures à dmax et d'autres inférieures ou égales à dmax, on recherche parmi les valeurs de dispersion supérieures à dmax celle correspondant au capteur de température le plus bas afin d'identifier le premier capteur 15j qui se trouve apparemment au-dessus de la couche de neige.

A titre de contrôle, on examine alors les valeurs de dispersion d (j + 1) à dn correspondant aux capteurs 15 (j + 1) à 15n qui se trouvent au-dessus du capteur 15j. Si toutes les valeurs de dispersion d (j + 1) à dn sont supérieures à dmax, on prend comme hauteur de neige, la hauteur du capteur 15 (j-1) situé immédiatement au-dessous du capteur 15j. Si certaines des valeurs de dispersion d (j + 1) à dn sont inférieures ou égales à dmax, et afin de tenir compte d'un possible effet de givrage, on peut toutefois prendre la hauteur du capteur 15 (j-1) comme hauteur de neige si les capteurs situés au-dessus pour lesquels les valeurs de dispersion ne sont pas supérieures à dmax sont situés d'un même côté de la canne de mesure (par exemple si ce sont tous des capteurs de rang impair ou tous des capteurs de rang pair lorsque les capteurs sont situés alternativement sur deux côtés opposés de la canne). Dans le cas contraire, la hauteur du capteur 15 (j-1) n'est pas validée et l'on conserve comme hauteur de neige la valeur précédente (H = Hpréc.).

A titre de contrôle supplémentaire, on pourra, lorsqu'une nouvelle valeur H a été déterminée, comparer celle-ci à la valeur précédente Hpréc. afin de valider définitivement la nouvelle valeur H si l'écart entre H et Hpréc. reste inférieur à une valeur de seuil h prédéterminée, une chute de neige de hauteur h étant considérée comme impossible dans la période de temps que dure le relevé des ensembles de températures servant au calcul des valeurs de dispersion. Si un écart supérieur ou égal à h est constaté, on conserve la valeur précédente Hpréc.

Le processus décrit ci-avant permet d'évaluer la hauteur de neige avec une précision absolue de l'ordre de l'intervalle entre capteurs sur la canne. Cette précision est généralement suffisante pour les applications envisagées (ouverture ou fermeture de routes ou de pistes de ski, déclenchement d'une opération de déneigement).

Dans la mesure où une modélisation du comportement thermique de la canne de mesure aura été effectuée, il est possible d'atteindre une meilleure précision en effectuant une interpolation entre la hauteur du capteur le plus haut pour lequel la dispersion de température est inférieure ou égale au seuil choisi et la hauteur du capteur le plus bas pour lequel la dispersion de température est supérieure au seuil choisi.

On a envisagé ci-avant un traitement des signaux effectué au poste central à partir des données numériques reçues. En raison du grand nombre de valeurs mesurées, un prétraitement pourra être effectué sur le site où est implantée la canne (par exemple compression de données, premiers calculs), et les résultats de prétraitement seront alors envoyés au poste central pour y effectuer le calcul de la hauteur de neige.

**Revendications**

1. Procédé de mesure de hauteur d'un produit dans un milieu environnant ayant un comportement thermique différent de celui du produit, notamment pour mesurer la hauteur de neige sur le sol, le procédé comprenant:
   - la mise en place d'une canne de mesure (10) dont au moins la partie inférieure est destinée à être noyée dans le produit, avec une pluralité de capteurs (15a, 15b, ... 15n) répartis sur la hauteur de la canne, et
   - l'acquisition au cours du temps de signaux délivrés par les différents capteurs sur la canne, caractérisé en ce que:
   - les capteurs utilisés sont des capteurs de température (15a, 15b, ... 15n) de sorte que les signaux recueillis représentent les températures aux emplacements des capteurs sur la canne (10),
   - la variation dans le temps des signaux recueillis est examinée, et
   - le capteur le moins élevé qui délivre un signal dont la variation est supérieure à un seuil est identifié.

2. Procédé selon la revendication 1, caractérisé en ce que, pour chaque capteur (15a, 15b, ... 15n), on relève sur une période de temps donnée un ensemble de valeurs représentant l'amplitude mesurée périodiquement du signal délivré par le capteur, on élabore une caractéristique représentative de la dispersion des valeurs relevées, et l'on compare la caractéristique de dispersion à une valeur de seuil.

3. Dispositif de mesure de hauteur d'un produit dans un milieu environnant ayant un comportement thermique différent de celui du produit, notamment pour mesurer la hauteur de neige sur le sol, dispositif qui comporte:
   - une canne de mesure (10) dont au moins la partie inférieure est destinée à être noyée dans le produit dont la hauteur est à mesurer, et qui est munie de capteurs (15a, 15b, ... 15n) répartis sur sa hauteur, et
   - des circuits de détection et de traitement (21, 22, 30, 31, 32) qui sont reliés aux différents capteurs pour recueillir des signaux délivrés par les capteurs, caractérisé en ce que:

- les capteurs (15a, 15b, ... 15n) sont des capteurs de température, et
- les circuits de détection et de traitement (21, 22, 30, 31, 32) sont agencés pour recueillir lesdits signaux représentatifs de la température existant aux emplacements des capteurs sur la canne, et pour comparer la variation dans le temps des signaux recueillis à une valeur de seuil prédéterminée afin de fournir une information représentant la hauteur du produit en fonction des résultats des comparaisons.

4. Dispositif selon la revendication 3, caractérisé en ce que les circuits de détection et de traitement comprennent des moyens pour relever sur une période de temps donnée et pour chaque capteur un ensemble de valeurs représentant l'amplitude mesurée périodiquement du signal délivré par le capteur, des moyens pour élaborer une caractéristique représentative de la dispersion des valeurs relevées pour chaque capteur, et des moyens pour comparer chaque caractéristique de dispersion élaborée à une valeur de seuil.

5. Dispositif selon l'une quelconque des revendications 3 et 4, caractérisé en ce que les capteurs de température (15a, 15b, ... 15n) sont disposés sur la canne de mesure (10) de manière à ne pas être alignés d'un même côté de celle-ci.

6. Dispositif selon l'une quelconque des revendications 3 à 5, caractérisé en ce que la canne de mesure (10) est tubulaire, et les capteurs de température (15a, 15b, ... 15n) sont fixés dans des passages formés à travers la paroi de la canne et sont reliés aux circuits de détection et de traitement par des conducteurs logés dans le passage central de la canne.

7. Dispositif selon l'une quelconque des revendications 3 à 6, caractérisé en ce que les circuits de détection et de traitement comprennent des moyens de conversion analogique-numérique (213) reliés aux capteurs pour délivrer des données numériques représentant les amplitudes des signaux délivrés par les capteurs, un système de transmission (22, 30, 31) pour transmettre les données numériques, ou des informations numériques élaborées à partir de celles-ci, à un poste central (33) et des moyens de calcul pour déterminer la hauteur recherchée à partir desdites informations numériques.

**Claims**

1. Method for measuring the height of a product in surroundings having a different thermal behaviour from that of the product, and particularly for measuring the height of snow on the ground, the method comprising the steps of:
   - providing a measuring rod (10) of which at least the lower part is designed to be embedded in the product, with a plurality of sensors (15a, 15b,...15n) distributed over the height of the rod, and
   - picking up, at time intervals, the signals delivered by the different sensors on the rod, characterized in that:
   - the sensors used are temperature sensors (15a, 15b,...15n) so that the picked up signals represent the temperatures prevailing at the locations of the sensors on the rod (10),
   - the variation in time of the picked up signals is monitored, and
   - the lowest situated sensor which produces a signal of which the variation exceeds a threshold, is identified.

2. Method according to claim 1, characterized in that, for every sensor (15a, 15b,...15n), a set of values representing the periodically measured amplitude of the signal produced by the sensor, is recorded, a characteristic representing the dispersion of the recorded values is worked out, and the dispersion characteristic is compared to a threshold value.

3. Device for measuring the height of a product in surroundings having a different thermal behaviour from that of the product, and particularly for measuring the height of snow, said device comprising:
   - a measuring rod (10) of which at least the lower part is designed to be embedded in the product of which the height is to be measured, and which is provided with temperature sensors (15a, 15b...15n) distributed over its height, and
   - detecting and processing circuits (21,22,30,31,32) which are connected to the different sensors, for picking up the signals produced by the sensors, characterized in that:
   - the sensors (15a, 15b,...15n) are temperature sensors, and
   - the detection and processing circuits are so arranged as to pick up said signals representing the temperature prevailing at the locations of the sensors on the rod, and for comparing the variation in time of the picked-up signals with preset threshold value, in order to provide an information representing the height of the product as a function of the results of the comparisons.

4. Device according to claim 3, characterized in that the detecting and processing circuits comprise means for recording over a given period of time and for every sensor, a set of values representing the periodically measured amplitude of the signal produced by the sensor, means for working out a characteristic representing the dispersion of the values recorded for every sensor, and means for comparing each worked out dispersion characteristic with a threshold value.

5. Device according to any one of claims 3 and 4, characterized in that the temperature sensors (15a,15b,...15n) are placed on the measuring rod (10) in such a way as not to be all aligned on one side of said rod.

6. Device according to any one of claims 3 to 5, characterized in that the measuring rod (10) is tubular and the temperature sensors (15a,15b,...15n) are fixed in passages formed through the wall of the rod and are connected to the detecting and processing circuits via wire conductors housed in the central passage of the rod.

7. Device according to any one of claims 3 to 6, characterized in that the detecting and processing circuits comprise analog-to-digital converting means (213) connected to the sensors in order to produce digital data representing the amplitudes of the signals delivered by the sensors, a transmission system (22,30,31) for transmitting the digital date, or digital information worked out therefrom to a central unit (33), and computing means for determining the desired height from said digital information.

**Patentansprüche**

1. Verfahren zum Messen der Höhe eines Produkts in einem umgebenden Milieu, das ein unterschiedliches thermisches Verhalten gegenüber dem des Produkts aufweist, insbesondere für das Messen der Schneehöhe über dem Boden, wobei das Verfahren aufweist:

das Vorortsetzen eines Meßstocks (10), von dem wenigstens der untere Bereich dazu bestimmt ist, in das Produkt eingetaucht zu werden, mit einer Mehrzahl von Aufnehmern (15a,15b ,...15n), die über die Höhe des Stocks verteilt sind, und

der Aufnahme über den Zeitverlauf von durch die unterschiedlichen Aufnehmer an dem Stock gelieferten Signale,

**dadurch gekennzeichnet, daß:**

die verwendeten Aufnehmer Temperaturaufnehmer (15a,15b,...15n) derart sind, daß die aufgenommenen Signale die Temperaturen an den Plätzen der Aufnehmer an dem Stock (10) darstellen,

die Veränderung in der Zeit der empfangenen Signale untersucht wird, und

der am wenigsten erhöhte Aufnehmer, der ein Signal liefert, dessen Veränderung größer ist als ein Schwellenwert, identifiziert wird.

2. Verfahren nach Anspruch 1, **dadurch gekennzeichnet,** daß für jeden Aufnehmer (15a,15b,...15n) über eine vorgegebene Zeitdauer eine Gesamtheit von Werten, die die periodisch gemessene Amplitude des von dem Aufnehmer gelieferten Signals darstellen, aufgenommen wird, eine repräsentative Kennzeichnung der Verteilung der aufgenommenen Werte ausgeführt wird und das Kennzeichen der Verteilung mit einem Schwellenwert verglichen wird.

3. Vorrichtung zum Messen der Höhe eines Produkts in einem umgebenden Milieu, das ein thermisches Verhalten unterschiedlich zu jenem des Produkts aufweist, insbesondere zum Messen der Schneehöhe über dem Boden, wobei die Vorrichtung aufweist:

einen Meßstock (10), von dem wenigstens der untere Bereich dazu bestimmt ist, in das Produkt eingetaucht zu werden, dessen Höhe zu messen ist, und der mit über seine Höhe verteilten Aufnehmern (15a,15b,...15n) versehen ist, und

Schaltkreise des Erfassens und Verarbeitens (21,22,30,31,32), die mit den verschiedenen Aufnehmern verbunden sind, um die von den Aufnehmern gelieferten Signale zu empfangen,

**dadurch gekennzeichnet, daß:**

die Aufnehmer (15a,15b,...15n) Temperaturaufnehmer sind, und

die Schaltkreise zum Erfassen und Verarbeiten (21,22,30,31,32) angeordnet sind, um die Signale aufzunehmen, die der Temperatur entsprechen, die an den Stellen der Aufnehmer an dem Stock vorherrscht und zum Vergleichen des Unterschieds in der Zeit der empfangenen Signale mit einem vorbestimmten Schwellenwert, um eine Information zu liefern, die der Höhe des Produkts in Abhängigkeit der Vergleichsergebnisse darstellt.

4. Vorrichtung nach Anspruch 3, **dadurch gekennzeichnet,** daß die Schaltkreise der Erfassung und Verarbeitung Einrichtungen aufweisen zum Aufnehmen über eine Zeitdauer, die für jeden Aufnehmer vorgegeben ist, einer Gesamtheit von Werten, die die periodisch gemessene Amplitude des Signals darstellen, das von dem Aufnehmer geliefert wird, Einrichtungen zum Ausarbeiten eines Kennzeichens, das der Verteilung der für jeden Aufnehmer aufgenommenen Werte entspricht, und Einrichtungen zum Vergleichen eines jeden Verteilungskennzeichens aufweisen, das auf einen Schwellenwert ausgearbeitet ist.

5. Vorrichtung nach einem der Ansprüche 3 oder 4, **dadurch gekennzeichnet,** daß die Temperaturaufnehmer (15a,15b...15n) auf dem Meßstock (10) derart angeordnet sind, daß sie nicht auf derselben Seite von diesem ausgerichtet werden können.

6. Vorrichtung nach einem der Ansprüche 3 bis 5, **dadurch gekennzeichnet,** daß der Meßstab (10) rohrförmig ist und die Temperaturaufnehmer (15a,15,...15n) in Kanälen befestigt sind, die durch die Wand des Stocks ausgebildet sind, und die mit den Schaltkreisen zum Erfassen und Verarbeiten durch Leiter verbunden sind, die in dem Zentralkanal des Stockes angeordnet sind.

7. Vorrichtung nach einem der Ansprüche 3 bis 6, **dadurch gekennzeichnet,** daß die Schaltkreise zum Erfassen und Verarbeiten analognumerische Wandlereinrichtungen (213), die mit den Aufnehmern verbunden sind, um numerische Daten zu liefern, die den Amplituden der von den Aufnehmern gelieferten Signalen entsprechen, ein Übertragungssystem (22,30,31), um die numerischen Daten oder die numerischen Informationen, die, ausgehend von denen, ausgearbeitet sind, zu einer zentralen Stelle (33) zu übertragen, und Recheneinrichtungen aufweisen, um die gesuchte Höhe, ausgehend von den numerischen Informationen, zu bestimmen.

Fig.1

Fig.2

Fig.3

Signal capteur 15 n

Signal capteur 15 j

Signal capteur 15 (j-1)

Signal capteur 15a

Temps

Fig-4

211 — Générateur de Courant

Circuit de Commande — 215

Multiplexeur 210

212

Convertisseur A/N 213

Registre Tampon 214

Unité de transmission 22

30

Vers poste central

15n

15b

15a

Unité d'acquisition 21

**Fig. 5**

Relevé de n ensembles d'échantillons de température. → Calcul de valeurs de dispersion d1 à dn → d1 à dn > d max ? — non — d1 à dn ≤ d max — non

d1 à dn > d max ? — oui → ... — oui → Hauteur neige = 0

Recherche capteur le plus bas 15 j situé au-dessus de la neige → d(j+1) à dn > d max ? — non / oui — Givrage probable — non / oui → H = Hauteur capteur 15(j-1) → H - Hprec < h ? — oui → Hauteur neige = H — non → Hauteur neige = Hprec